# EUROPÄISCHE PATENTSCHRIFT

(11) **EP 1 118 594 B1**
(45) Veröffentlichungstag und Bekanntmachung des Hinweises auf die Patenterteilung: **27.08.2003**
(21) Anmeldenummer: 00123830.2
(22) Anmeldetag: 02.11.2000
(51) Int. Cl.: C03C 3/093, C03C 3/091

(54) **Alkalifreie Aluminoborosilicatgläser und ihre Verwendung**
Alkali-free aluminoborosilicate glass and its use
Verre aluminoborosilicate depourvu d'alcalins et des utilisations

(30) Priorität: 12.01.2000 DE 10000837
(43) Veröffentlichungstag der Anmeldung: 25.07.2001
(73) Patentinhaber: Schott Glas, 55122 Mainz (DE); Carl-Zeiss-Stiftung trading as Schott Glas, 55122 Mainz (DE)
(72) Erfinder: Peuchert, Ulrich, Dr., 55129 Mainz (DE); Brix, Peter, Dr., 55116 Mainz (DE)

(56) Entgegenhaltungen:
- EP-A- 0 672 629
- EP-A- 0 953 549
- EP-A- 1 070 681
- EP-A- 1 078 893
- WO-A-98/27019
- DE-A- 19 601 922
- DATABASE WPI Section Ch, Week 199717 Derwent Publications Ltd., London, GB; Class L01, AN 1997-188222 XP002168035 & JP 09 048632 A (NIPPON ELECTRIC GLASS CO), 18. Februar 1997 (1997-02-18)
- DATABASE WPI Section Ch, Week 199734 Derwent Publications Ltd., London, GB; Class L01, AN 1997-369217 XP002168036 & JP 09 156953 A (NIPPON ELECTRIC GLASS CO), 17. Juni 1997 (1997-06-17)
- DATABASE WPI Section Ch, Week 200040 Derwent Publications Ltd., London, GB; Class L01, AN 2000-454638 XP002168037 & JP 2000 159541 A (NIPPON ELECTRIC GLASS CO), 13. Juni 2000 (2000-06-13)

## Beschreibung

Gegenstand der Erfindung sind alkalifreie Aluminoborosilicatgläser. Gegenstand der Erfindung sind auch Verwendungen dieser Gläser.

An Gläser für Anwendungen als Substrate in der Flüssigkristall- Flachdisplaytechnologie, z. B. in TN (Twisted Nematic)/STN (Super Twisted Nematic) - Displays, Active Matrix Liquid Crystal Displays (AMLCD's), Thin Film Transistors (TFTs) oder Plasma Adressed Liquid Crystals (PALC's) werden hohe Anforderungen gestellt. Neben einer hohen Temperaturwechselbeständigkeit sowie einer guten Resistenz bezüglich der im Herstellungsverfahren der Flachbildschirme eingesetzten aggressiven Chemikalien sollten die Gläser eine über einen weiten Spektralbereich (VIS, UV) hohe Transparenz sowie zur Gewichtseinsparung eine geringe Dichte aufweisen. Der Einsatz als Trägermaterial für integrierte Halbleiterschaltkreise z. B. in TFT-Displays ("chip on glass") erfordert darüber hinaus die thermische Anpassung an das Dünnfilmmaterial Silicum. Dieses wird üblicherweise als amorphes Silicium (a-Si) bei niedrigen Temperaturen bis 300 °C auf dem Glassubstrat abgeschieden. Durch eine nachfolgende Wärmebehandlung bei Temperaturen von ca. 600 °C rekristallisiert das amorphe Silicium partiell. Die resultierende teilweise kristalline poly-Si-Schicht ist aufgrund der a-Si-Anteile charakterisiert durch einen Wert der thermischen Ausdehnung von α_{20/300} ≅ 3,7 · 10⁻⁶/K. Je nach dem Verhältnis von a-Si zu poly-Si kann der thermische Ausdehnungskoeffizient α_{20/300} zwischen 2,9 · 10⁻⁶/K und 4,2 · 10⁻⁶/K variieren. Werden durch Hochtemperaturbehandlungen oberhalb 700 °C bzw. direkte Abscheidung über CVD-Prozesse weitestgehend kristalline Si-Schichten generiert, so gewünscht auch in der Dünnschichtphotovoltaik, ist ein Substrat mit deutlich reduzierter thermischer Dehnung bis 3,2 · 10⁻⁶K oder weniger erforderlich.

Für Anwendungen in der Display- und Photovoltaiktechnologie ist ferner die Abwesenheit von Alkaliionen Bedingung. Herstellungsbedingte Anteile von Natriumoxid unterhalb 1000 ppm sind in Hinblick auf die i. a. "vergiftende" Wirkung durch Eindiffusion von Na⁺ in die Halbleiterschicht noch tolerierbar.

Geeignete Gläser sollten großtechnisch in ausreichender Qualität (keine Blasen, Knoten, Einschlüsse), z. B. auf einer Floatanlage oder in Ziehverfahren wirtschaftlich produzierbar sein. Besonders die Herstellung dünner (< 1 mm) streifenfreier Substrate von geringer Oberflächenwelligkeit über Ziehverfahren erfordert eine hohe Entglasungsstabilität der Gläser. Einem auf die Halbleiter-Microstruktur nachteilig wirkenden Schrumpf ("compaction") des Substrates während der Herstellung, insbesondere im Falle von TFT-Displays, kann durch Einstellen einer geeigneten temperaturabhängigen Viskositätskennlinie des Glases entgegengewirkt werden: Hinsichtlich der thermischen Prozeßund Formstabilität sollte es bei einerseits nicht zu hohen Schmelz- und Verarbeitungs (V_{A}) -temperaturen, d. h. bei einem V_{A} ≤ 1350 °C, eine ausreichend hohe Transformationstemperatur Tg, d. h. Tg > 700 °C aufweisen.

Die Anforderungen an Glassubstrate für die LCD-Displaytechnologie bzw. Dünnschicht-Photovoltaik-Technologie sind auch in "Glass Substrates for AMLCD applications: properties and implications" von J.C. Lapp, SPIE Proceedings, Vol. 3014, Invited paper (1997) beschrieben bzw. in "Photovoltaik - Strom aus der Sonnen von J. Schmid, Verlag C. F. Müller, Heidelberg 1994.

Das genannte Anforderungsprofil wird am ehesten durch Erdalkalialuminoborosilicatgläser erfüllt. Die bekannten und in den folgenden Schriften beschriebenen Gläser für Display- oder Solarzellensubstrate weisen jedoch noch Nachteile auf und erfüllen nicht den gesamten Anforderungskatalog:

Zahlreiche Schriften beschreiben Gläser mit geringen MgO-Gehalten: JP 9-169 538 A, JP 4-160 030 A, JP 9-100 135 A, EP 714 862 A1, EP 341 313 B1, US 5,374,595, WO 97/11919 und WO 97/11920. Solche Gläser, insbesondere die aus EP 714 862 A1 und JP 9-169538 A, besitzen nicht die gewünschte Schmelzbarkeit, was sehr hohe Temperaturen bei den Viskositäten 10² dPas und 10⁴ dPas bestätigen, und weisen relativ hohe Dichte auf. Gleiches gilt für die MgO-freien Gläser der DE 37 30 410 A1.

Die Gläser aus US 5,374,595 enthalten mit 2 - 7 mol-% hohe BaO-Anteile, was zu unerwünscht hohen Dichten der Gläser führt. Gleiches gilt auch für die Glaser aus JP 61-132536 A, JP 8-295530 A, JP 9-48632 A, JP 9-156953 A.

Ähnliches gilt für die Gläser der JP 10-72237 A mit hohen SrO-Gehalten. Nachweislich der Beispiele weisen die Gläser sehr hohe Temperaturen bei den Viskositäten 10² dPas und 10⁴ dPas auf.

Gleiches gilt auch für Gläser mit niedrigen B₂O₃-Gehalten, wie sie aus JP 9-263421 A und JP 10-45422 A bekannt sind. Insbesondere in Kombination mit geringen BaO-Gehalten wird die Entglasungsneigung nachteilig hoch sein. Andererseits sind zu hohe B₂O₃-Gehalte - solche Gläser sind beispielsweise in US 4,824,808 beschrieben - nachteilig für die angestrebten Eigenschaften hohe Temperaturbeständigkeit und hohe chemische Resistenz, insbesondere gegenüber salzsauren Lösungen.

Auch die Gläser, die wenig SiO₂ enthalten, zeigen, insbesondere, wenn sie größere Mengen an B₂O₃ enthalten und erdalkaliarm sind, keine ausreichende chemische Beständigkeit. Dies betrifft die Gläser aus WO 97/11919 und EP 672 629 A2. Die SiO₂-reicheren Varianten der letztgenannten Schrift weisen nur geringe Al₂O₃-Anteile auf, was nachteilig für das Kristallisationsverhalten ist.

Die Schrift JP 9-123 33 A, die Gläser für Festplatten betrifft, beschreibt Zusammensetzungen aus SiO₂, Al₂O₃, CaO und weiteren fakultativen Komponenten, darunter B₂O₃. Die aufgeführten Gläser sind hoch erdalkalioxidhaltig und besitzen damit eine hohe thermische Dehnung, die sie für den Einsatz in der LCD- bzw. PV-Technologie ungeeignet macht. Auch dürfte ihre visuelle Qualität nicht ausreichend sein.

Aus DE 196 17 344 C1 und DE 196 03 698 C1 der Anmelderin sind alkalifreie zinnoxidhaltige SiO₂-arme bzw. SrO-freie Gläser mit einem thermischen Ausdehnungskoeffizienten α_{20/300} von ca. 3,7 · 10⁻⁶/K und sehr guten chemischen Beständigkeiten bekannt. Sie sind geeignet für den Einsatz in der Displaytechnik. Da sie jedoch zwingend ZnO enthalten, sind sie insbesondere für eine Verarbeitung auf einer Floatanlage nicht optimal geeignet. Insbesondere bei höheren Gehalten ZnO (> 1,5 Gew.-%) besteht nämlich die Gefahr der Bildung von ZnO-Belägen auf der Glasoberfläche durch Verdampfung und anschließende Kondensation im Heißformgebungsbereich.

WO 98/27019 beschreibt Gläser für Display- und Photovoltaik-Anwendungen mit geringer Dichte und hoher Temperaturbeständigkeit. In diesen teilweise hoch CaO-haltigen Gläsern ist der Gehalt an SrO und BaO auf in der Summe 3 Gew.-% beschränkt, was die Gläser kristallisationsanfällig macht.

DE 196 01 022 A1 beschreibt Gläser aus einem sehr variablen Zusammensetzungsbereich, die zwingend ZrO₂ und SnO enthalten. Die ausweislich der Beispiele relativ hoch BaO-haltigen Gläser neigen aufgrund ihres zwingenden ZrO₂-Anteils zu Glasfehlem.

DE 42 13 579 A1 beschreibt Gläser für TFT-Anwendungen mit thermischen Ausdehnungskoeffizienten < 5,5 x 10⁻⁶/K, ausweislich der Beispiele ≥ 4,0 · 10⁻⁶/K. Diese Gläser mit relativ hohen Anteilen an B₂O₃ bei vergleichsweise niedrigen SiO₂-Gehalten sind nicht sehr chemisch resistent, insbesondere nicht gegenüber verdünnter Salzsäure.

In den ungeprüften japanischen Veröffentlichungen JP 10-25132 A, JP 10-114538 A, JP 10-130034 A, JP 10-59741 A, JP 10-324526 A, JP 11-43350 A, JP 11-49520 A, JP 10-231139 A und JP 10-139467 A werden sehr große und mit vielen fakultativen Komponenten variierbare Zusammensetzungsbereiche für Displaygläser genannt, denen jeweils ein oder mehrere bestimmte Läuterungsmittel zugesetzt werden. Diese Schriften geben jedoch keinerlei Hinweise, wie gezielt Gläser mit dem kompletten beschriebenen Anforderungsprofil erhalten werden können.

Es ist Aufgabe der Erfindung, Gläser bereitzustellen, die die genannten physikalischen und chemischen Anforderungen an Glassubstrate für Flüssigkristall-Displays, insbesondere für TFT-Displays, und für Dünnschichtsolarzellen, insbesondere auf Basis von µc-Si erfüllen, Gläser, die eine hohe Temperaturbeständigkeit, einen prozeßgünstigen Verarbeitungsbereich und eine ausreichende Entglasungsstabilität aufweisen.

Die Aufgabe wird durch Aluminoborosilicatgläser gemäß den unabhängigen Ansprüchen gelöst.

Die Gläser enthalten > 58 bis 65 Gew.-% SiO₂. Bei einem geringeren Gehalt verschlechtert sich die chemische Beständigkeit, bei einem höheren Gehalt nimmt die thermische Ausdehnung zu geringe Werte an und nimmt die Kristallisationsneigung des Glases zu. Bevorzugt ist ein Gehalt von bis zu 64,5 Gew.-% SiO₂.

Die Gläser enthalten > 14 bis 25 Gew.-% Al₂O₃. Al₂O₃ wirkt positiv auf die Temperaturstabilität der Gläser, ohne die Verarbeitungstemperatur zu sehr anzuheben. Bei einem geringeren Gehalt erhöht sich die Kristallisationsanfälligkeit der Gläser. Bevorzugt ist ein Gehalt von mehr als 14,5 Gew.-%, besonders bevorzugt von mehr als 18 Gew.-% Al₂O₃, ganz besonders bevorzugt von wenigstens 20,5 Gew.-%, insbesondere von wenigstens 21 Gew.-% Al₂O₃. Bevorzugt ist ein Gehalt von höchstens 24 Gew.-% Al₂O₃.

Der B₂O₃-Gehalt ist auf höchstens 11,5 Gew.-% beschränkt, um eine hohe Transformationstemperatur T_{g} zu erzielen. Auch würden höhere Gehalte die chemische Beständigkeit verschlechtern. Vorzugsweise beträgt der B₂O₃-Gehalt höchstens 11 Gew.-%. Der B₂O₃-Gehalt beträgt mehr als 6 Gew.-%, um die gute Schmelzbarkeit und die gute Kristallisationsbeständigkeit der Gläser zu gewährleisten. Bevorzugt ist ein Mindestgehalt von mehr als 8 Gew.-%.

Vorzugsweise sind die netzwerkbildenden Komponenten Al₂O₃ und B₂O₃ mit voneinander abhängigen Mindestanteilen vorhanden, wodurch ein bevorzugter Gehalt an den Netzwerkbildnem SiO₂, Al₂O₃, B₂O₃ gewährleistet wird. So beträgt der Al₂O₃-Mindestgehalt bei einem B203-Mindestgehalt von > 6 Gew.-% vorzugsweise > 18 Gew.-% und beträgt der B₂O₃-Mindestgehalt bei einem Al₂O₃-Mindestgehalt von > 14 Gew.-% vorzugsweise > 8 Gew.-%

Vorzugsweise beträgt die Summe von SiO₂, Al₂O₃ und B₂O₃ zwischen 83 und 91 Gew.-%.

Ein wesentlicher Glasbestandteil sind die netzwerkwandelnden Erdalkalioxide. Vor allem durch Variation ihrer Anteile wird ein thermischer Ausdehnungskoeffizient α _{20/300} zwischen 2,8 · 10⁻⁶/K und 3,8 · 10⁻⁶/K erzielt. Die einzelnen Oxide liegen in den folgenden Anteilen vor:

Die Gläser enthalten 4 bis 8 Gew.-% MgO. Ein hoher Anteil an MgO wirkt sich positiv auf die gewünschten Eigenschaften niedrige Dichte und niedrige Verarbeitungstemperatur aus, während ein eher geringer Anteil die Kristallisationsbeständigkeit und die chemische Beständigkeit begünstigt.

Die Gläser können bis zu 8 Gew.-% CaO enthalten. Höhere Anteile würden die thermische Dehnung zu sehr erhöhen und würden die Kristallisationsbeständigkeit herabsetzen. Für besonders niedrig dehnende Gläser, d. h. insbesondere für Gläser mit Audehnungskoeffizienten α_{20/300} bis zu 3,4 · 10⁻⁶/K, ist eine Beschränkung auf maximal < 2 Gew.-% CaO bevorzugt.

Auch BaO ist ein fakultativer Bestandteil, wobei sein Höchstgehalt auf weniger als 0,5 Gew.-% beschränkt ist. So wird die gute Schmelzbarkeit gewährleistet und die Dichte niedrig gehalten. Vorzugsweise ist das Glas BaO-frei.

Das Glas enthält bis zu < 4 Gew.-% des ebenfalls vergleichsweise schweren Erdalkalioxids SrO. Die Beschränkung auf diesen geringen Höchstgehalt ist insbesondere für eine geringe Dichte des Glases vorteilhaft.

Mit einer Mindestsumme von SrO und BaO von mehr als 3 Gew.-%, um, insbesondere bei eher CaO-reichen Zusammensetzungen, eine ausreichende Kristallisationsstabilität zu gewährleisten, beträgt der Mindestgehalt an SrO 2,6 Gew.-%.

Bei CaO-armen oder CaO-freien Varianten, insbesondere bei CaO-Gehalten zwischen 0 und < 2 Gew.-%, reicht ein Mindestgehalt an SrO von wenigstens > 0,5 Gew.-% aus. Die Summe aus SrO und BaO beträgt bei diesen Gläsern bevorzugt wenigstens 1 Gew.-%, besonders bevorzugt wenigstens > 1 Gew.-%.

Bei hohen Al₂O₃-Gehalten, d. h. Gehalten > 21 Gew.-%, kann der SrO-Gehalt über einen weiteren Bereich variiert werden, nämlich zwischen 2,6 und < 8 Gew.-%. Insbesondere die nun möglich gewordenen hohen SrO-Gehalte führen vorteilhaft zu besonders kristallisationsstabilen Gläsern mit ausreichend geringen Dichten. Auch bei diesen Gläsern beträgt die Mindestsumme an SrO und BaO > 3 Gew.-%. Diese Gläser weisen thermische Ausdehnungskoeffizienten zwischen 2,8 · 10⁻⁶/K und 3,6 · 10⁻⁶/K auf.

Die Gläser können bis zu 2 Gew.-% ZnO, bevorzugt bis zu < 2 Gew.-% ZnO, enthalten. ZnO hat als Netzwerkwandler eine gerüstlockernde Funktion, und es hat einen geringeren Einfluß auf die thermische Ausdehnung als die Erdalkalioxide. Es hat einen ähnlichen Einfluß auf die Viskositätskennlinie wie B₂O₃. Vorzugsweise, insbesondere bei einer Verarbeitung der Gläser im Floatverfahren, ist der ZnO-Anteil auf höchstens 1,5 Gew.-% beschränkt. Höhere Anteile würden die Gefahr störender ZnO-Beläge auf der Glasoberfläche erhöhen, die sich durch Verdampfung und anschließende Kondensation im Heißformgebungsbereich bilden können.

Die Gläser sind alkalifrei. Unter alkalifrei wird hierbei verstanden, daß sie im wesentlichen frei sind von Alkalioxiden, wobei sie Verunreinigungen von weniger als 1000 ppm enthalten können.

Die Gläser können bis zu 2 Gew.-% ZrO₂ + TiO₂ enthalten, wobei sowohl der TiO₂-Gehalt als auch der ZrO₂-Gehalt einzeln bis zu 2 Gew.-% betragen kann. ZrO₂ erhöht vorteilhaft die Temperaturstabilität der Gläser. Aufgrund seiner Schwerlöslichkeit erhöht es jedoch die Gefahr von ZrO₂-haltigen Schmelzrelikten (sog. "Zirkonnester") im Glas. Daher wird vorzugsweise auf die Zugabe von ZrO₂ verzichtet. Geringe Gehalte an ZrO₂, die von der Korrosion zirkonhaltigen Wannenmaterials herrühren, sind völlig unproblematisch. TiO₂ setzt vorteilhaft die Solarisationsneigung, d. h. die Abnahme der Transmission im sichtbaren Wellenlängenbereich aufgrund von UV-VIS-Strahlung, herab. Bei Gehalten von mehr als 2 Gew.-% können durch Komplexbildung mit Fe³⁺lonen, die im Glas in geringen Gehalten infolge von Verunreinigungen der eingesetzten Rohstoffe vorhanden sind, Farbstiche auftreten.

Die Gläser können herkömmliche Läutermittel in herkömmlichen Mengen enthalten: So können sie bis zu 1,5 Gew.-% As₂O₃, Sb₂O₃, SnO₂ und/oder CeO₂ enthalten. Auch ist der Zusatz von je 1,5 Gew.-% Cl⁻ (beispielsweise als BaCl₂), F⁻ (z. B. als CaF₂) oder SO₄²⁻ (z. B. als BaSO₄) möglich. Die Summe aus As₂O₃, Sb₂O₃, CeO₂, SnO₂, Cl⁻, F und SO₄²⁻ soll jedoch 1,5 Gew.-% nicht überschreiten.

Wenn auf die Läutermittel As₂O₃ und Sb₂O₃ verzichtet wird, sind diese Gläser nicht nur mit verschiedenen Ziehverfahren, sondern auch mit dem Floatverfahren verarbeitbar.

Beispielsweise im Hinblick auf eine einfache Gemengezubereitung ist es von Vorteil, dass sowohl auf ZrO₂ als auch auf SnO₂ verzichtet werden kann und dennoch Gläser mit dem genannten Eigenschaftsprofil, insbesondere mit hoher thermischer und chemischer Beständigkeit und mit geringer Kristallisationsneigung, erhalten werden.

### Ausführungsbeispiele:

Aus herkömmlichen, von unvermeidlichen Verunreinigungen abgesehen im wesentlichen alkalifreien, Rohstoffen wurden bei 1620°C Gläser in Pt/Ir-Tiegeln erschmolzen. Die Schmelze wurde anderthalb Stunden bei dieser Temperatur geläutert, anschließend in induktiv beheizte Platintiegel umgegossen und zur Homogenisierung 30 Minuten bei 1550°C gerührt.

Die Tabelle zeigt vierzehn Beispiele erfindungsgemäßer Gläser mit ihren Zusammensetzungen (in Gew.-% auf Oxidbasis) und ihren wichtigsten Eigenschaften. Das Läutermittel SnO₂ (Beispiele 1, 2, 4, 5, 7, 8, 10-14) bzw. As₂O₃ (Beispiele 3, 6, 9) mit einem Anteil von 0,3 Gew.-% ist nicht aufgeführt. Folgende Eigenschaften sind angegeben:
- der thermische Ausdehnungskoeffizient α _{20/300} [10⁻⁶/K]
- die Dichte p [g/cm³]
- die dilatometrische Transformationstemperatur T_{g} [°C] nach DIN 52324
- die Temperatur bei der Viskosität 10⁴ dPas (bezeichnet als T 4 [°C])
- die Temperatur bei der Viskosität 10² dPas (bezeichnet als T 2 [ °C] berechnet aus der Vogel-Fulcher-Tammann-Gleichung
- der Brechwert n_{d}
- die Beständigkeit gegenüber gepufferter Fluorwasserstoffsäure "BHF" als Gewichtsverlust (Abtragswert) von allseitig polierten Glasplättchen der Abmessungen 50 mm x 50 mm x 2 mm nach Behandlung mit 10 %i-ger NH₄F · HF für 20 Min. bei 23 °C [mg/cm²].

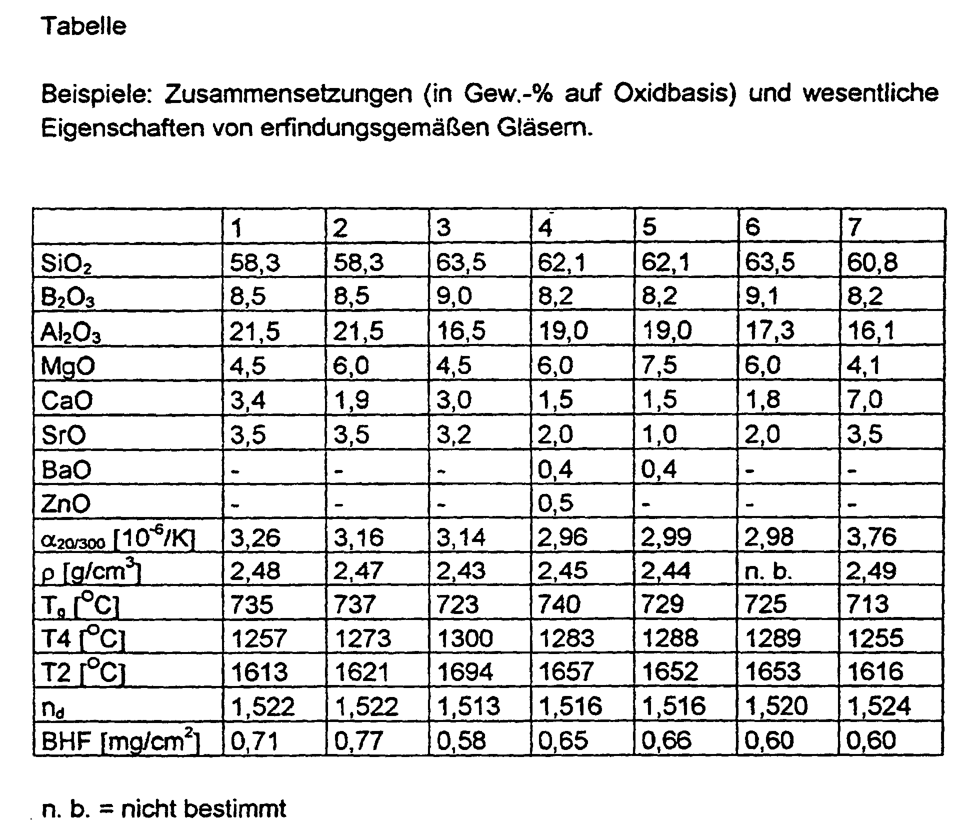

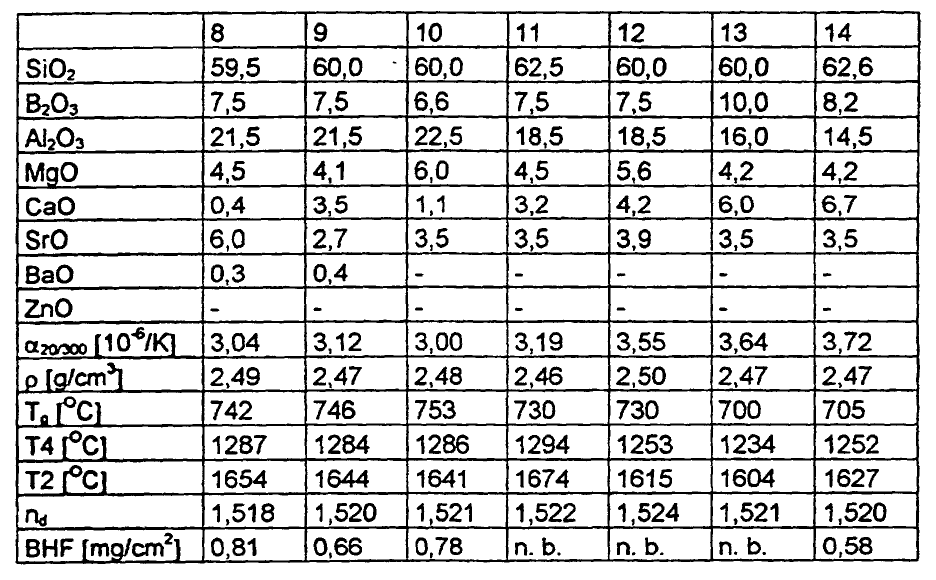

Für die Beispielgläser 3 und 14 wurde weiter eine Säurebeständigkeit, und zwar die Säurebeständigkeit "HCl" als Gewichtsverlust (Abtragswert) von allseitig polierten Glasplättchen der Abmessungen 50 mm x 50 mm x 2 mm nach Behandlung mit 5%iger Salzsäure für 24 Stunden bei 95 °C, bestimmt: Sie beträgt 0,78 mg/cm² (Glas 3) bzw. 0,50 mg/cm² (Glas 14).

Wie die Ausführungsbeispiele verdeutlichen, besitzen die erfindungsgemäßen Gläser folgende vorteilhafte Eigenschaften:
- eine thermische Dehnung α _{20/300} zwischen 2,8 · 10⁻⁶/K und 3,8 · 10⁻⁶/K bzw. zwischen 2,8 · 10⁻⁶/K und 3,6 · 10⁻⁶/K, bzw. bis 3,4 10⁻⁶/K damit angepaßt an das Ausdehnungsverhalten von amorphen wie auch zunehmend polykristallinem Silicium.
- mit T_{g} > 700 °C eine hohe Transformationstemperatur, also eine hohe Temperaturbeständigkeit. Dies ist wesentlich für einen möglichst geringen herstellungsbedingten Schrumpf ("compaction") und für die Verwendung der Gläser als Substrate für Beschichtungen mit amorphen Si-Schichten und deren anschließende Temperung.
- mit p < 2,600 g/cm³ eine geringe Dichte
- eine Temperatur bei der Viskosität 10⁴ dPas von maximal 1350 °C, und eine Temperatur bei der Viskosität 10² dPas von maximal 1720 °C, was hinsichtlich der Heißformgebung sowie Schmelzbarkeit eine geeignete Viskositätskennlinie bedeutet. Die Gläser sind als Flachgläser mit den verschiedenen Ziehverfahren, z.B. Micro-sheet-Down-draw-, Up-draw- oder Overflow-fusion-Verfahren und in bevorzugter Ausführung, wenn sie frei von As₂O₃ und Sb₂O₃ sind, auch mit dem Floatverfahren herstellbar.
- eine hohe chemische Beständigkeit, dokumentiert durch die gute Beständigkeit gegenüber gepufferter Flußsäurelösung, was sie ausreichend inert gegen die bei der Herstellung von Flachbildschirmen verwendeten Chemikalien macht.
- mit n_{d} ≤ 1,526 einen geringen Brechwert. Diese Eigenschaft ist physikalische Grundlage für eine hohe Transmission.

Die Gläser weisen eine hohe Temperaturwechselbeständigkeit und eine gute Entglasungsstabilität auf.

Damit sind die Gläser hervorragend geeignet für die Verwendung als Substratglas in der Displaytechnik, insbesondere für TFT-Displays, und in der Dünnschicht-Photovoltaik.

## Patentansprüche

1. Alkalifreies Aluminoborosilicatglas mit einem thermischen Ausdehnungskoeffizienten α_{20/300} zwischen 2,8 · 10⁻⁶/K und 3,8 · 10⁻⁶/K, das folgende Zusammensetzung (in Gew.-% auf Oxidbasis) aufweist:
| | |
|---|---|
| SiO₂ | > 58 - 65 |
| B₂O₃ | > 6 - 11,5 |
| Al₂O₃ | > 14 - 25 |
| MgO | 4 - 8 |
| CaO | 0 - 8 |
| SrO | 2,6 - < 4 |
| BaO | 0 - < 0,5 |
| mit SrO + BaO | > 3 |
| ZnO | 0-2 |

2. Alkalifreies Aluminoborosilicatglas mit einem thermischen Ausdehnungskoeffizienten α_{20/300} zwischen 2,8 · 10⁻⁶/K und 3,4 · 10⁻⁶/K, das folgende Zusammensetzung (in Gew.-% auf Oxidbasis) aufweist:
| | |
|---|---|
| SiO₂ | > 58 - 65 |
| B₂O₃ | > 6 - 11,5 |
| Al₂O₃ | > 14 - 25 |
| MgO | 4 - 8 |
| CaO | 0 - < 2 |
| SrO | > 0,5 - < 4 |
| BaO | 0 - < 0.5 |
| ZnO | 0 - 2 |

3. Alkalifreies Aluminiumborosilicatglas mit einem thermischen Ausdehnungskoeffizienten α_{20/300} zwischen 2,8 · 10⁻⁶/K und 3,6 · 10⁻⁶/K, das folgende Zusammensetzung (in Gew.-% auf Oxidbasis) aufweist:
| | |
|---|---|
| SiO₂ | > 58 - 65 |
| B₂O₃ | > 6 - 11,5 |
| Al₂O₃ | > 21 - 25 |
| MgO | 4-8 |
| CaO | 0 - 8 |
| SrO | 2,6 - < 8 |
| BaO | 0 - < 0,5 |
| mit SrO + BaO | > 3 |
| ZnO | 0 - 2 |

4. Aluminiumborosilicatglas nach Anspruch 1 oder 2
**dadurch gekennzeichnet,**
**dass** es mehr als 18 Gew.-%, bevorzugt wenigstens 20,5 Gew.-%, besonders bevorzugt wenigstens 21 Gew.-% Al₂O₃ enthält.

5. Aluminiumborosilicatglas nach wenigstens einem der Ansprüche 1 bis 4,
**dadurch gekennzeichnet,**
**dass** es mehr als 8 Gew.-% B₂O₃ enthält.

6. Aluminoborosilicatglas nach wenigstens einem der Ansprüche 1 bis 5,
**dadurch gekennzeichnet,**
**dass** es zusätzlich enthält:
| | |
|---|---|
| ZrO₂ | 0 - 2 |
| TiO₂ | 0 - 2 |
| mit ZrO₂ + TiO₂ | 0 - 2 |
| As₂O₃ | 0 - 1,5 |
| Sb₂O₃ | 0 - 1,5 |
| SnO₂ | 0-1,5 |
| CeO₂ | 0 - 1,5 |
| Cl⁻ | 0 - 1,5 |
| F⁻ | 0 - 1,5 |
| SO₄²⁻ | 0 - 1,5 |
| mit AS₂O₃ + Sb₂O₃ + SnO₂ + CeO₂ +Cl⁻ + F⁻ + SO₄²⁻ | 0 - 1,5 |

7. Aluminoborosilicatglas nach wenigstens einem der Ansprüche 1 bis 6,
**dadurch gekennzeichnet,**
**dass** es bis auf unvermeidliche Verunreinigungen frei ist von Arsenoxid und Antimonoxid und daß es auf einer Floatanlage herstellbar ist.

8. Aluminoborosilicatglas nach wenigstens einem der Ansprüche 1 bis 7, das einen thermischen Ausdehnungskoeffizienten α_{20/300} zwischen 2,8 und 3,6 · 10⁻⁶/K, eine Transformationstemperatur Tg > 700 °C und eine Dichte ρ < 2,600 g/cm³ aufweist.

9. Verwendung des Aluminoborosilicatglases nach wenigstens einem der Ansprüche 1 bis 8 als Substratglas in der Displaytechnik.

10. Verwendung des Aluminoborosilicatglases nach wenigstens einem der Ansprüche 1 bis 8 als Substratglas in der Dünnschicht-Photovoltaik.

## Claims

1. Alkali-free aluminoborosilicate glass having a coefficient of thermal expansion α_{20/300} of between 2.8 · 10⁻⁶/K and 3.8 · 10⁻⁶/K, which has the following composition (in % by weight, based on oxide):
| | |
|---|---|
| SiO₂ | > 58 - 65 |
| B₂O₃ | > 6 - 11.5 |
| Al₂O₃ | > 14 - 25 |
| MgO | 4 - 8 |
| CaO | 0 - 8 |
| SrO | 2.6 - < 4 |
| BaO | 0 - < 0.5 |
| with SrO + BaO | > 3 |
| ZnO | 0 - 2 |

2. Alkali-free aluminoborosilicate glass having a coefficient of thermal expansion α_{20/300} of between 2.8 · 10⁻⁶/K and 3.4 · 10⁻⁶/K, which has the following composition (in % by weight, based on oxide):
| | |
|---|---|
| SiO₂ | > 58 - 65 |
| B₂O₃ | > 6 - 11.5 |
| Al₂O₃ | > 14 - 25 |
| MgO | 4 - 8 |
| CaO | 0 - < 2 |
| SrO | > 0.5 - < 4 |
| BaO | 0 - < 0.5 |
| ZnO | 0 - 2 |

3. Alkali-free aluminoborosilicate glass having a coefficient of thermal expansion α_{20/300} of between 2.8 · 10⁻⁶/K and 3.6 · 10⁻⁶/K, which has the following composition (in % by weight, based on oxide):
| | |
|---|---|
| SiO₂ | > 58 - 65 |
| B₂O₃ | > 6 - 11.5 |
| Al₂O₃ | > 21 - 25 |
| MgO | 4 - 8 |
| CaO | 0 - 8 |
| SrO | 2.6 - < 8 |
| BaO | 0 - < 0.5 |
| with SrO + BaO | > 3 |
| ZnO | 0 - 2 |

4. Aluminoborosilicate glass according to Claim 1 or 2, **characterized in that** it comprises more than 18% by weight, preferably at least 20.5% by weight, particularly preferably at least 21% by weight, of Al₂O₃.

5. Aluminoborosilicate glass according to at least one of Claims 1 to 4, **characterized in that** the glass comprises more than 8% by weight of B₂O₃.

6. Aluminoborosilicate glass according to at least one of Claims 1 to 5, **characterized in that** it additionally comprises:
| | |
|---|---|
| ZrO₂ | 0 - 2 |
| TiO₂ | 0 - 2 |
| with ZrO₂ + TiO₂ | 0 - 2 |
| As₂O₃ | 0 - 1.5 |
| Sb₂O₃ | 0 - 1.5 |
| SnO₂ | 0 - 1.5 |
| CeO₂ | 0 - 1.5 |
| Cl⁻ | 0 - 1.5 |
| F⁻ | 0 - 1.5 |
| SO₄²⁻ | 0 - 1.5 |
| with As₂O₃ + Sb₂O₃ + SnO₂ + CeO₂ + Cl⁻ + F⁻ + SO₄²⁻ | 0 - 1.5 |

7. Aluminoborosilicate glass according to at least one of Claims 1 to 6, **characterized in that** the glass is free of arsenic oxide and antimony oxide, apart from unavoidable impurities, and that it can be produced in a float plant.

8. Aluminoborosilicate glass according to at least one of Claims 1 to 7, which has a coefficient of thermal expansion α_{20/300} of between 2.8 · 10⁻⁶/K and 3.6 · 10⁻⁶/K, a glass transition temperature Tg of > 700°C and a density p of < 2.600 g/cm³.

9. Use of the aluminoborosilicate glass according to at least one of Claims 1 to 8 as substrate glass in display technology.

10. Use of the aluminoborosilicate glass according to at least one of Claims 1 to 8 as substrate glass in thin-film photovoltaics.

## Revendications

1. Verre de borosilicate d'aluminium exempt d'alcalis, ayant un coefficient de dilatation thermique α_{20/300} compris entre 2,8.10⁻⁶/K et 3,8.10⁻⁶/K, qui présente la composition suivante (en % en poids sur la base des oxydes) :
| | |
|---|---|
| SiO₂ | >58-65 |
| B₂O₃ | >6-11,5 |
| Al₂O₃ | >14-25 |
| MgO | 4-8 |
| CaO | 0-8 |
| SrO | 2,6-<4 |
| BaO | 0-<0,5 |
| avec SrO + BaO | >3 |
| ZnO | 0-2. |

2. Verre de borosilicate d'aluminium exempt d'alcalis, ayant un coefficient de dilatation thermique α_{20/300} compris entre 2,8.10⁻⁶/K et 3,4.10⁻⁶/K, qui présente la composition suivante (en % en poids sur la base des oxydes) :
| | |
|---|---|
| SiO₂ | >58-65 |
| B₂O₃ | >6-11,5 |
| Al₂O₃ | >14-25 |
| MgO | 4-8 |
| CaO | 0-<2 |
| SrO | >0,5-<4 |
| BaO | 0-<0,5 |
| ZnO | 0-2. |

3. Verre de borosilicate d'aluminium exempt d'alcalis, ayant un coefficient de dilatation thermique α_{20/300} compris entre 2,8.10⁻⁶/K et 3,6.10⁻⁶/K, qui présente la composition suivante (en % en poids sur la base des oxydes) :
| | |
|---|---|
| SiO₂ | >58-65 |
| B₂O₃ | >6-11,5 |
| Al₂O₃ | >21-25 |
| MgO | 4-8 |
| CaO | 0-8 |
| SrO | 2,6-<8 |
| BaO | 0-<0,5 |
| avec SrO + BaO | >3 |
| ZnO | 0-2. |

4. Verre de borosilicate d'aluminium selon la revendication 1 ou 2, **caractérisé en ce qu'**il contient plus de 18 % en poids, de préférence au moins 20,5 % en poids, de façon particulièrement préférée au moins 21 % en poids d'Al₂O₃.

5. Verre de borosilicate d'aluminium selon au moins l'une des revendications 1 à 4, **caractérisé en ce qu'**il contient plus de 8 % en poids de B₂O₃.

6. Verre de borosilicate d'aluminium selon au moins l'une des revendications 1 à 5, **caractérisé en ce qu'**il contient en outre :
| | |
|---|---|
| ZrO₂ | 0-2 |
| TiO₂ | 0-2 |
| avec ZrO₂+TiO₂ | 0-2 |
| As₂O₃ | 0-1,5 |
| Sb₂O₃ | 0-1,5 |
| SnO₂ | 0-1,5 |
| CeO₂ | 0-1,5 |
| Cl⁻ | 0-1,5 |
| F- | 0-1,5 |
| SO₄²⁻ | 0-1,5 |
| avec As₂O₃ + Sb₂O₃ + SnO₂ + CeO₂ + Cl⁻ + F- + SO₄²⁻ | 0-1,5 |

7. Verre de borosilicate d'aluminium selon au moins l'une des revendications 1 à 6, **caractérisé en ce qu'**il est exempt, hormis les impuretés inévitables, d'oxyde d'arsenic et d'oxyde d'antimoine, et **en ce qu'**il peut être élaboré sur une unité de flottage.

8. Verre de borosilicate d'aluminium selon au moins l'une des revendications 1 à 7, qui présente un coefficient de dilatation thermique α_{20/300} compris entre 2,8 et 3,6.10⁻⁶/K, une température de transformation Tg > 700°C et une densité ρ<2,600 g/cm³.

9. Utilisation du verre de borosilicate d'aluminium selon au moins l'une des revendications 1 à 8 en tant que verre de support dans la technique de l'affichage.

10. Utilisation du verre de borosilicate d'aluminium selon au moins l'une des revendications 1 à 8 en tant que verre de support dans la technique photovoltaïque à couche mince.
